# EUROPEAN PATENT SPECIFICATION

(11) **EP 3 228 946 B1**
(45) Date of publication and mention of the grant of the patent: **25.08.2021**
(21) Application number: 16188124.8
(22) Date of filing: 09.09.2016
(51) Int. Cl.: F24F 12/00, F24F 13/02

(54) **BUILDING WITH DEMAND-CONTROLLED HEAT EXCHANGE SYSTEM FOR VENTILATION, AND HEAT EXCHANGE SYSTEM**
GEBÄUDE MIT BEDARFSGESTEUERTEM WÄRMETAUSCHSYSTEM ZUR BELÜFTUNG SOWIE WÄRMETAUSCHSYSTEM
CONSTRUCTION AVEC SYSTÈME D'ÉCHANGE THERMIQUE À COMMANDE DE VENTILATION ET LEDIT SYSTÈME

(30) Priority: 08.04.2016 EP 16164502
(43) Date of publication of application: 11.10.2017
(73) Proprietor: Vero Duco N.V., 8630 Veurne (BE)
(72) Inventor: Renson, Luc Louis, BE- 8620 Nieuwpoort (BE)
(74) Representative: Nederlandsch Octrooibureau

(56) References cited:
- EP-A2- 0 044 560
- EP-A2- 2 363 656
- CA-A1- 2 492 294
- DE-C1- 19 836 891
- FR-A1- 2 969 256
- NL-C- 2 008 944
- US-A1- 2007 169 927
- None

## Description

The invention concerns a heat exchange system for a building, comprising a housing which contains a first flow passage and a second flow passage,
a heat exchanger by means of which the first flow passage and the second flow passage are in a heat-exchanging relationship to each other,
a first main air connection at one end of the first flow passage, at the other end of which first flow passage at least two first secondary air connections are located,
a second main air connection at one end of the second flow passage, at the other end of which second flow passage exactly one second secondary air connection is located,
a booster for ensuring the flow of air through the first main air connection via the first flow passage and the first secondary air connections, and
a second booster for ensuring the flow of air via the second secondary air connection, the second flow passage and the second main air connection.

Such a system is known, and has the advantage that the energy for heating and/or cooling the various rooms of the building can be utilised more efficiently. In the following, the expression "room" may also be interpreted as a zone which for instance comprises several rooms. Also, a zone may for instance consist of, or comprise, a traffic zone such as a hall or staircase and the like. Also, an attic or cellar may be comprised. The discharged air emits energy to the supplied air at the heat exchanger so that energy for heating or cooling the rooms/zones can be saved.

The air which flows through the heat exchange system must be distributed evenly to a greater or lesser extent over the various rooms. In practice however, it is found that the need for the supply and discharge of air may differ greatly from room to room. This is affected by the occupation of the rooms, the moisture production, the incident sunlight and similar. In known buildings however, the set distribution of the supply to the various rooms and the discharge from the various rooms cannot be adapted, or can scarcely be adapted, to the actual requirements.

EP0044560 discloses a heat exchange system according to the preamble of claim 1.

The invention is defined by the appended claims.

One aim of the invention is therefore to create a system in which the ventilation is improved. Another aim is to create a system in which the ventilation can be adjusted room by room. Yet another aim is to create a system which has an efficient design with a limited number of components and reduced cost, which nevertheless is able to provide the required individual regulation of the separate rooms in a building. These and other aims are achieved by the heat exchange system having the features of claim 1. The flow regulator is an actively controlled flow regulator which is controlled by a control system as mentioned below. This flow controller is able to actively regulate, under the control of the control system, the flow between a maximum and a minimum amount. Preferably the flow controller is also able to actively regulate, under the control of the control system, the flow continuously, or in discrete steps, between such maximum and minimum amounts. The heat exchanger forms part of all flow passages. All flow passages are connected, preferably permanently connected, to the heat exchanger.

In one embodiment, a flow regulator is provided for each first secondary air connection. Also, at least one flow regulator may be provided for two first secondary air connections. In particular, a single flow regulator may be located between the heat exchanger and at least two first secondary air connections. Preferably such single flow regulator may comprise a valve or tiltable blade which in a first position prevents flow through one of the first secondary air connections and allows flow through the other of the first secondary air connections, and in a second position prevents flow through said other of the first secondary air connections and allows flow through said one of the first secondary air connections. Said valve or blade may be positioned in intermediate positions as well so as to gradually allow more flow to occur through one of the first secondary air connections, while at the same time diminishing the flow through the other first secondary air connection. In this way, the flow to or from different rooms or a room and hall may be regulated by means of a single flow regulator. Alternatively, several flow regulators may be present. Thus a flow regulator may be placed in the first flow passage, located between the heat exchanger and one of the first secondary air connections, and another flow regulator is located between the heat exchanger and another of the first secondary air connections, for the individual regulation of the air flow through said one first secondary air connection independently of the regulation of the air flow through said other first secondary air connection. In particular, the flow regulator may be provided at the site of one first secondary air connection and/or at the site of the second secondary air connection. Preferably, the flow regulator is provided in the first flow passage.

In the invention, the first flow passage is a supply flow passage, the first main air connection is a main air supply connection and the first secondary connections are secondary air supply connections, and the second flow passage is a discharge flow passage, the second main air connection is a main air discharge connection and the second secondary connection is a secondary air discharge connection. Alternatively, the first flow passage is a discharge flow passage, the first main air connection is a main air discharge connection and the first secondary air connections are secondary air discharge connections, and the second flow passage is a supply flow passage, the second main air connection is a main air supply connection and the second secondary air connection is a secondary air supply connection.

In these embodiments, for each room for which the secondary air connection has a flow regulator, the ventilation can be adapted in the desired manner. This may be done in different ways. One example is regulation by means of a control panel located in the room concerned. Automatic regulation is however preferred in which a measuring system for measuring a property of the air is provided at least in the first flow passage and/or second flow passage. Such a measuring system may for example comprise a sensor unit for measuring the CO2 content, the relative humidity and similar of the air. Furthermore, a control system may be provided for regulating the flow on the basis of the property measured by the measuring system.

Moreover, it may be desirable to be able to adapt the heat exchange systems flexibly. For example, it may be preferable to create a general embodiment which has the possibility of allowing regulation per secondary air connection as required, while others may remain open. In the invention, a flow regulator forms part of a cassette, in which case the housing is provided by a cassette chamber in which the cassette is received. This cassette chamber may have a guide by means of which the cassette can be guided into the cassette chamber or out of the cassette chamber respectively. In such an embodiment, the flow regulator can be fitted or replaced very easily. It is also possible to install the flow regulator after the installation of the heat exchange system and tubes.

Preferably, the cassette guide is oriented transversely to the air flow direction through the first flow passage and/or the second flow passage. The (guide of the) cassette chamber preferably has an opening which opens on the outside of the housing and is closed there by a cover. The flow regulator is thus firstly easily accessible from outside and secondly well protected from external influences by the cover. This could also cover the cables for the power supply, signal transmission and similar. In an efficient embodiment, several cassette chambers may be provided next to each other, which cassette chambers are closed by a common cover.

In particular, the flow regulator is located in or inside the housing of the heat exchange system. This also includes a position of the flow regulator(s) in the wall of the housing. The flow regulators and the associated cassettes are thus located under the cover which closes the housing. In this way, the flow regulators with the associated measuring system and control systems are well protected from external influences without the need for supplementary measures. Thus there are no parts which are located outside the housing. This has the advantage that ducts can be connected directly to the housing, which is important if little space is available for the installation.

Reference is made to prior art EP 2770267A2, consisting of a heat exchange system in which the flow regulators are arranged in the connected ducts. Such installations have relatively large dimensions, while the electrical lines for the power supply to the valves and for signal transmission must be installed afterwards. Because of the many separate components constituting the known systems, the dimensions of these systems are relatively large. Furthermore, the fitting of such an installation is labour-intensive. The various components such as valves, measuring systems and similar are less well protected.

The invention also concerns a building comprising several rooms and a heat exchange system for ventilating air. Such a building is known and has the advantage that the energy for heating and/or cooling the various rooms thereof can be utilised more efficiently. The discharged air emits energy to the supplied air at the heat exchanger so that energy for heating or cooling the rooms can be saved.

The air which flows through the heat exchange system must be distributed evenly to a greater or lesser extent over the various rooms. In practice however, it is found that the need for the supply and discharge of air may differ greatly from room to room. This is affected by the occupation of the rooms, the moisture production, the incident sunlight and similar. In known buildings however, the set distribution of the supply to the various rooms and the discharge from the various rooms cannot be adapted, or can scarcely be adapted, to the actual requirements.

One further aim of the invention is therefore to create a building in which the ventilation is improved. Another aim is to create a building in which the ventilation can be adjusted room by room. A further aim is to create a building in which the heat exchange system can be adapted flexibly. Yet another aim is to create a building in which firstly the energy demand can be handled efficiently, and in which secondly the supply/discharge of air can be regulated room by room. Also, a design is preferred with a limited number of components and reduced cost, which nevertheless is able to provide the required individual regulation of the separate rooms in a building. These and other aims are achieved by a building having the features of claim 8.

The flow regulator or regulators located in the supply and/or discharge air flow passage offers/offer the possibility of adapting the air flow room by room, while the exchange of heat between the supplied and discharged air is retained. These functions are all accommodated in the heat exchange system so that a compact design is obtained which contains all the desired functions. This allows simple installation. In addition, because the flow regulator is provided in the housing, there are no visible connections between the flow regulators and the secondary supply and/or discharge ducts, nor are there any visible cable connections from the flow regulator(s) to the control system. Furthermore, the heat exchange system with the flow regulator(s) can be moved and connected as a whole. In addition, on overhaul of the system, in particular of the flow regulators, it is not necessary to decouple the secondary supply and/or discharge ducts. Also servicing of the heat exchange system can be done very efficient, as all the parts are located in one housing.

As mentioned, a room may mean a spacial zone with one or more room sections or chambers or a traffic zone. In this way, the supply/discharge of air can be regulated for each room and hence also for the one or more room sections of this room.

In one embodiment, a flow regulator is provided for each secondary air supply and/or discharge duct. Alternatively, at least one flow regulator may be provided for two secondary air supply and/or discharge ducts. In one embodiment, the exactly one secondary air duct connected to the one room is a secondary air supply duct. Alternatively, the exactly one secondary air duct connected to the one room is a secondary air discharge duct. Exactly one means one and only one, sometimes also referred to as just one.

The exactly one second secondary air duct may directly be connected to a single room or a traffic zone and the like, however the secondary air duct may alternatively be connected to a manifold which in turn is connected to at least two branches, each branch being connected to a respective room or zone.

Due to the circumstance that the actively controlled flow regulator(s) are positioned in the housing of the heat exchange system, there is no need to have such flow regulators in the rooms or zones.

The invention is also related to a method for ventilating the building as described before, comprising the steps of activating the first booster for providing a supply air flow from outside the building through the first main air duct, through the first flow passage and out of the first secondary air duct(s) into at least one room or the hall, and of activating the second booster for providing a discharge air flow from a room or the hall through the exactly one second secondary air duct, through the second flow passage and out of the second main air duct.

Alternatively, the method for ventilating the building may comprise the steps of activating the second booster for providing a supply air flow from outside the building through the second main air duct, through the second flow passage and out of the exactly one second secondary air duct into one room or the hall, and of activating the first booster for providing a discharge air flow from at least one room or the hall through the first secondary air duct(s), through the first flow passage and out of the first main air duct.

The supply air flow and the discharge air flow are always directed along or through the heat exchanger, thereby ensuring the required heat recovery.

### Brief description of Drawings

The invention will be explained with reference to an exemplary embodiment shown in the figures.
Figure 1 shows a side view of a heat exchange system in opened state.
Figure 2 shows a side view in perspective of a further embodiment of the heat exchange system in opened state.
Figure 3 shows a schematic side view of the heat exchange system of Figure 2.
Figure 4 shows a cross-section of a cassette for the heat exchange system of Figures 1-3.
Figure 5 shows a schematic view of a building with a heat exchange system.

### Detailed Description of Embodiments

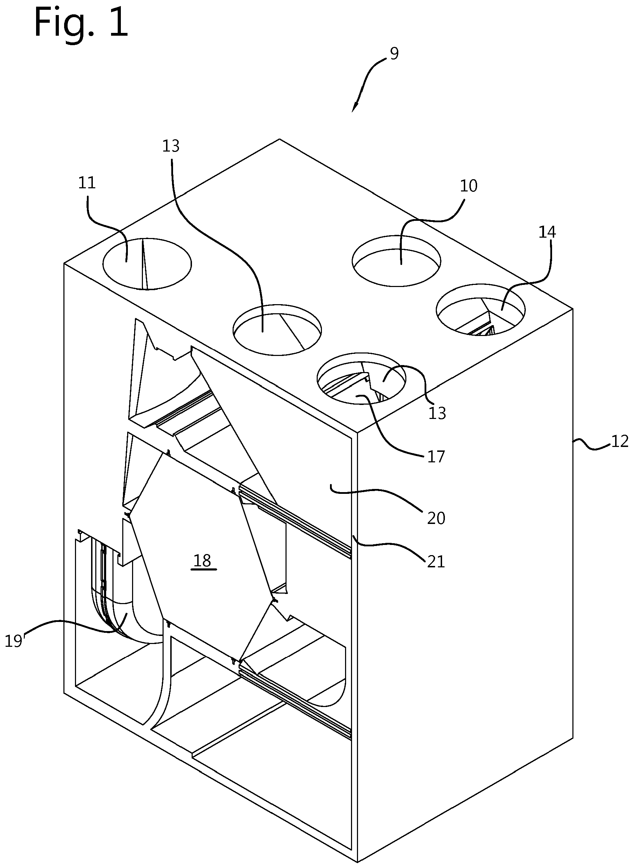

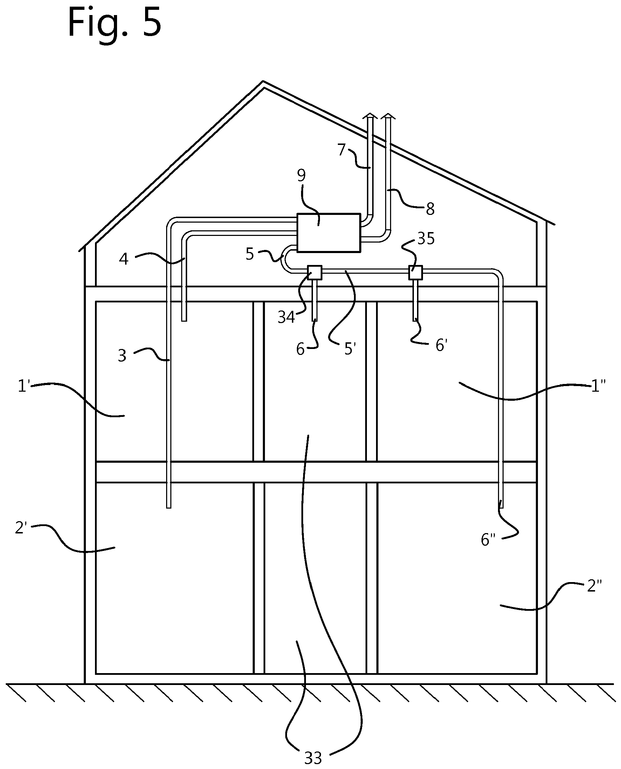

A first embodiment of the heat exchange system 9 is shown in Figure 1. This heat exchange system 9 has a housing, designated as a whole as 12, with a main air supply connection 10 to which the main air supply duct 7 of Figure 5 connects. Furthermore, the heat exchange system 9 has a main air discharge connection 11 to which the main air discharge duct 8 connects. At the same end of the housing 12 are several, in the exemplary embodiment shown two, secondary air supply connections 13 and one secondary air discharge connection 14.A supply flow passage extends between the main air supply connection 10 and the secondary air supply connections 13. Correspondingly, a discharge flow passage extends between the secondary air discharge connection 14 and the main discharge air connection 11. The heat exchanger, designated as a whole as 18, is placed in this supply flow passage and discharge flow passage, and ensures that energy is exchanged between the supplied air and the discharged air. The air is supplied and discharged by means of two boosters 19 (only one shown in Figure 1), one of which is placed in the supply flow passage and the other in the discharge flow passage.

In connection with offering the possibility of a desired distribution of supplied air, a flow regulator 17 is placed in the secondary air supply connections 13. The flow regulator 17 is held in a cassette 20 which in turn is received in a cassette chamber 21, located at or behind the respective secondary air supply connections 13. In this embodiment of the heat exchange system 9, one flow regulator 17 is provided per two secondary supply connections 13.

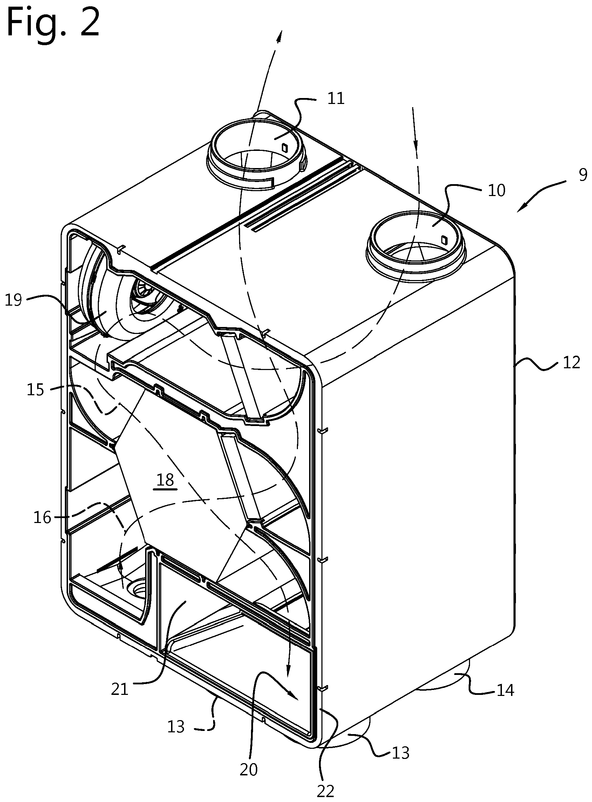

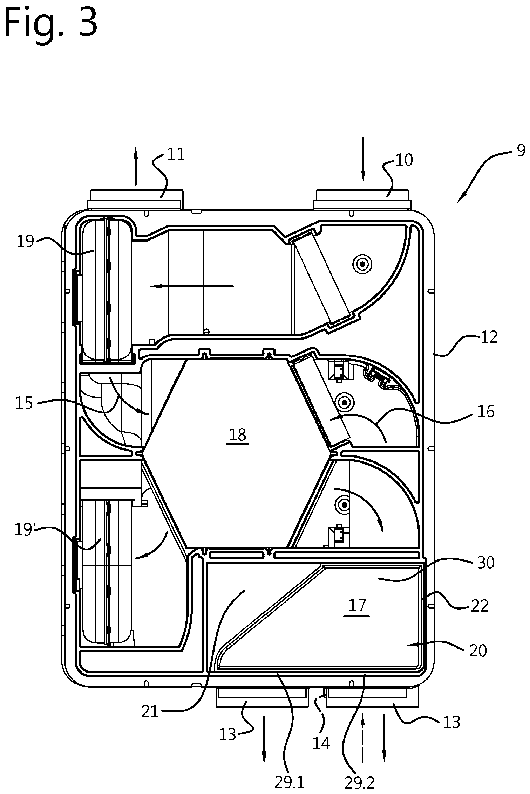

Figures 2-3 show a further embodiment of the heat exchange system 9. This heat exchange system has a housing, designated as a whole as 12, with a main air supply connection 10 to which the main air supply duct 7 of Figure 5 connects. Furthermore, the heat exchange system has a main air discharge connection 11 to which the main air discharge duct 8 connects. At the other end of the housing are several, in this exemplary embodiment two, secondary air supply connections 13 and one secondary air discharge connections 14.

The supply flow passage (schematically indicated by dotted line 15) extends between the main air supply connection 10 and the secondary air supply connection 13. Correspondingly, the discharge flow passage (schematically indicated by dotted line 16) extends between the secondary air discharge connections 14 and the main air discharge connection 11. The heat exchanger designated as a whole as 18 is placed in the supply flow passage 15 and discharge flow passage 17, and ensures that energy is exchanged between the supplied air and the discharged air. The air is supplied and discharged by means of the two boosters 19, one of which is placed in the supply flow passage 15 and the other in the discharge flow passage 16.

In the general embodiment of the heat exchange system 9, depending on the resistance in the various ducts, the air flows to the various rooms or is extracted therefrom without further possibility of regulation. In connection with offering the possibility of a desired distribution of the supplied air, flow regulators 17 are placed in the secondary air supply connection 13. Each flow regulator is contained in a cassette 20, each of which in turn is held in a cassette chamber 21 located at or behind the corresponding secondary air supply connection 13. A cassette guide 22 is provided in each cassette chamber to facilitate the fitting or removal or replacement of such a cassette 20.

Each cassette furthermore has a measuring system, which may for example comprise a sensor for measuring the CO2 value of the air, the humidity or similar. The measuring system may be placed on the flow regulator 17 itself, but it is also possible to place this elsewhere on the cassette or elsewhere in the supply flow passage 15, or to place a separate sensor in the room. In addition, a control system may be provided on the cassette 20 with which, on the basis of the data obtained by the measuring system, the flow regulator 17 can be set to the desired level.

Correspondingly, similar cassettes 20, cassette chambers 21 and cassette guides 22 are provided at the secondary air supply connections 13. All cassette chambers can be covered by a cover with which the housing 12 as a whole is closed.

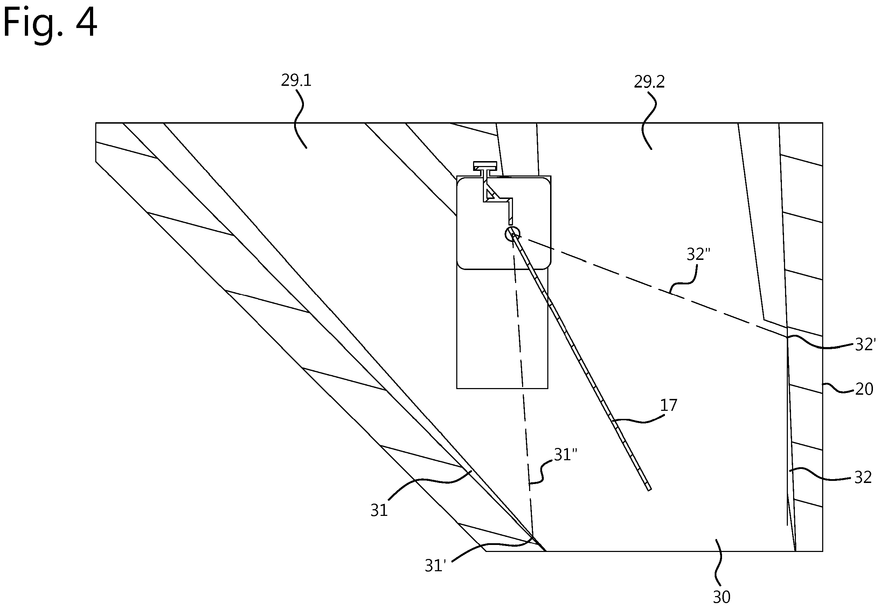

Figure 4 shows a cross-section of a cassette for the heat exchange system in Figures 1-3. The cassette 20 is provided with two cassette outlets 29 located next to each other, which connect to the respective secondary supply connections 13 when the cassette is introduced in the system 9, and an opposing cassette inlet 30 which connects to the supply flow passage of the system 9. The flow regulator or valve 17 is provided with a suspension point between the two cassette outlets 29. The valve 17 functions as a flow regulator for both cassette outlets 29 or secondary supply connections 13.

The flow regulator or valve 17 may assume various positions for regulating the flow through the respective cassette outlets 29 or the secondary supply connections 13. In the state shown, the valve 17 allows air to flow through the cassette from the cassette inlet 30 through both a first cassette outlet 29.1 and a second cassette outlet 29.2. In a first closed position 31", the valve 17 is oriented towards a first contact wall 31 of the cassette 20. A free end of the valve 17 then rests on the first contact wall 31 at a first contact point 31'. In the first closed position, the first cassette outlet 29.1 is closed so that the air flow is now allowed only from the cassette inlet 30 to the second cassette outlet 29.2.

In a second closed position 32", the valve 17 is oriented towards a second contact wall 32 of the cassette 20. The free end of the valve 17 rests on the second contact wall 32 at a second contact point 32'. In the second closed position, the second cassette outlet 29.2 is closed so that the air flow is now allowed only from the cassette inlet 30 to the first cassette outlet 29.1.

The air flow to the respective cassette outlets may be regulated further by orienting the valve 17 in any desired position between the first and second closed state. When the valve 17 is oriented closer to the first contact wall 31, the opening for air flow to the first cassette outlet 29.1 is smaller, so that the air flow through this cassette outlet will be reduced. At the same time, the opening for air flow to the second cassette outlet 29.2 becomes larger, so that the air flow through the second cassette outlet will increase. The converse applies when the flap 17 is oriented more towards the second contact wall 32.

The building shown in Figure 5 has several, in this exemplary embodiment two, ventilation zones to which air can be supplied by the secondary air supply ducts 3, 4 and/or from which air can be discharged via the secondary air discharge duct 5. Each ventilation zone comprises several, in this exemplary embodiment two, rooms 1', 1", 2', 2". The air to be supplied is conducted into the building via the main air supply duct 7 and discharged therefrom via the main air discharge duct 8. The heat exchange system indicated as a whole with reference numeral 9 is placed between the path formed between the main air supply duct 8 and the secondary air supply ducts 3, 4 on one side, and the path formed between the main air discharge duct 8 and the secondary air discharge duct 5 on the other.

In the embodiment shown, the secondary air discharge duct 5 is connected to manifolds 34, 35 with air discharge branches 6, 6'and 6". Alternatively, only one manifold may be used. Thus, air is discharged from the hall 33 and the rooms 1" and 2" via the single air discharge duct 5. Similarly, each one of the secondary air supply ducts 3, 4 may be connected to one or more manifolds to supply air to multiple rooms, preferably in the same zone.

In a preferred embodiment, the building comprises two ventilation zones to which air can be supplied by the secondary air supply ducts and one ventilation zone from which air can be discharged via the secondary air discharge duct. Each ventilation zone comprises at least one room, wherein in each room of a ventilation zone air can be supplied by a secondary air supply duct or wherein from each room of a ventilation zone air can be discharged by a secondary air discharge duct.

### List of Reference Numerals

- 1', 1",2', 2".: Room
- 3. 4.: Secondary air supply duct
- 5, 5'.: Secondary air discharge duct
- 6, 6', 6".: Air discharge branch
- 7.: Main air supply duct
- 8.: Main air discharge duct
- 9.: Heat exchange system
- 10.: Main air supply connection
- 11.: Main air discharge connection
- 12.: Housing of heat exchange system
- 13.: Secondary air supply connection
- 14.: Secondary air discharge connection
- 15.: Supply flow passage
- 16.: Discharge flow passage
- 17.: Flow regulator
- 18.: Heat exchanger
- 19.: First booster
- 19'.: Second booster
- 20.: Cassette
- 21.: Cassette chamber
- 22.: Cassette guide
- 29.1, 29.2: Cassette outlet
- 30.: Cassette inlet
- 31.: First cassette contact wall
- 31'.: First cassette contact point
- 32.: Second cassette contact wall
- 32'.: Second cassette contact point
- 33.: Hall
- 34, 35.: Manifold

## Claims

1. Heat exchange system (9) for a building, comprising a housing (12) which contains a supply flow passage (15) and a discharge flow passage (16),
a heat exchanger (18) by means of which the supply flow passage and the discharge flow passage are in a heat-exchanging relationship to each other,
a main air supply connection (10) at one end of the supply flow passage, at the other end of which supply flow passage at least two secondary air supply connections (13) are located,
wherein the one end of the supply flow passage and the other end of the supply flow passage are located respectively upstream and downstream from the heat exchanger (18), a main air discharge connection (11) at one end of the discharge flow passage, at the other end of which discharge flow passage exactly one secondary air discharge connection (14) is located,
a first booster (19) adapted to supply air from outside the building through the main air supply connection via the supply flow passage and the secondary air supply connections into the building, and
a second booster (19') adapted to discharge air from the building via the secondary air discharge connection, the discharge flow passage and the main air discharge connection, wherein the housing (12) is provided with at least one flow regulator (17) which is located between the heat exchanger (18) and a secondary air supply connection (13), **characterized in that**
the at least one flow regulator (17) forms part of a cassette (20) and the housing (12) is provided with a cassette chamber (21) in which the cassette is received.

2. Heat exchange system according to claim 1, wherein the flow regulator (17) is located between the heat exchanger (18) and at least two secondary air supply connections (13), and preferably comprises a valve or tiltable blade which in a first position prevents flow through one of the secondary air supply connections and allows flow through the other of the secondary air supply connections, and in a second position prevents flow through said other of the secondary air supply connections and allows flow through said one of the secondary air supply connections.

3. Heat exchange system (9) according to claim 1, wherein the supply flow passage (15) is provided with a flow regulator (17) which is located between the heat exchanger (18) and one of the secondary air supply connections (13), and another flow regulator (17) which is located between the heat exchanger (18) and another of the secondary air supply connections (13), for individual regulation of the air flow through said one supply secondary air connection independently of the regulation of the air flow through said other secondary air supply connection.

4. Heat exchange system (9) according to any of the preceding claims, wherein at least one flow regulator (17) is located at the site of a secondary air connection (13, 14)

5. Heat exchange system (9) according to any of the preceding claims, wherein at least the supply flow passage (15) is provided with a measuring system (23) for measuring a property of the air; or wherein at least the discharge flow passage (16) is provided with a measuring system for measuring a property of the air.

6. Heat exchange system (9) according to claim 5, wherein a control system is provided for controlling a flow regulator (17) on the basis of the property measured by the measuring system.

7. Heat exchange system (9) according to claim 5 or 6, wherein the measuring system and/or the control system form part of the cassette (20).

8. Building comprising several rooms (1, 2) and possibly a hall (33), at least two secondary air supply ducts (3, 4) and exactly one secondary air discharge duct (5), a main air supply duct (7) and a main air discharge duct (8) as well as a heat exchange system (9) according to any of the preceding claims,
wherein the at least two secondary air supply ducts (3, 4) are connected to a respective room (1', 2') or to one room (1', 2') and the hall (33) each and said exactly one secondary air discharge duct (5) is connected to a room or the hall (33); and
wherein the secondary air supply ducts (3, 4) are connected to respectively one of the secondary air supply connections (13) of the heat exchange system, the exactly one secondary air discharge duct (5) is connected to the exactly one secondary air discharge connection (14) of the heat exchange system, and wherein the main air supply duct (7) is connected to the main air supply connection (10) and the main air discharge duct (8) is connected to the main air discharge connection (11) of the heat exchange system (9), wherein the housing (12) is provided with at least one flow regulator (17) which is located between the heat exchanger (12) and a secondary air supply duct (3, 4) and/or with at least one flow regulator (17) which is located between the heat exchanger (12) and the secondary air discharge duct (5).

9. Building according to claim 8, wherein the flow regulator (17) is located between the heat exchanger (12) and at least two secondary air supply ducts (3, 4) and preferably comprises a valve or tiltable blade which in a first position prevents flow through one of the secondary air supply connections and allows flow through the other of the secondary air supply connections, and in a second position prevents flow through said other of the secondary air supply connections and allows flow through said one of the secondary air supply connections.

10. Building according to claim 8 or 9, wherein the exactly one secondary air discharge duct (5) is connected to a manifold (34, 35), said manifold being connected to at least two branches (6, 6', 6"), each branch being connected to a respective room (33, 1", 2").

11. Method for ventilating the building according to any of claims 8-10, comprising the steps of activating the first booster (19) for providing a supply air flow from outside the building through the main air supply duct (7), through the supply flow passage (15) and out of the secondary air supply duct(s) (3, 4) into at least one room (1, 2) or the hall (33), and of activating the second booster (19') for providing a discharge air flow from a room (1, 2) or the hall (33) through the exactly one secondary air discharge duct (5), through the discharge flow passage (16) and out of the main air discharge duct (8)'or comprising the steps of activating the second booster (19') for providing a supply air flow from outside the building through the main air discharge duct (7), through the discharge flow passage (15) and out of the exactly one secondary air discharge duct (5) into one room (1, 2) or the hall (33), and of activating the first booster (19) for providing a discharge air flow from at least one room (1, 2) or the hall (33) through the secondary air supply duct(s) (3, 4), through the supply flow passage (15) and out of the main air supply duct (7).

## Patentansprüche

1. Wärmetauschsystem (9) für ein Gebäude, umfassend ein Gehäuse (12), das eine Zuführströmungspassage (15) und eine Abführströmungspassage (16) enthält,
einen Wärmetauscher (18), über den die Zuführströmungspassage und die Abführströmungspassage in einer wärmeaustauschenden Beziehung zueinander stehen,
eine Hauptluftzuführverbindung (10) an einem Ende der Zuführströmungspassage, wobei an dem anderen Ende der Zuführströmungspassage zumindest zwei sekundäre Luftzuführverbindungen (13) lokalisiert sind,
wobei das eine Ende der Zuführströmungspassage und das andere Ende der Zuführströmungspassage stromaufwärts bzw. stromabwärts von dem Wärmetauscher (18) lokalisiert sind,
eine Hauptluftabführverbindung (11) an einem Ende der Abführströmungspassage, wobei an dem anderen Ende der Abführströmungspassage genau eine sekundäre Luftabführverbindung (14) lokalisiert ist,
einen ersten Booster (19), der dazu ausgelegt ist, Luft von außerhalb des Gebäudes durch die Hauptluftzuführverbindung über die Zuführströmungspassage und die sekundären Luftzuführverbindungen in das Gebäude zuzuführen, und
einen zweiten Booster (19'), der dazu ausgelegt ist, Luft von dem Gebäude über die sekundäre Luftabführverbindung, die Abführströmungspassage und die Hauptluftabführverbindung abzuführen, wobei das Gehäuse (12) mit zumindest einem Strömungsregulator (17) versehen ist, der zwischen dem Wärmetauscher (18) und einer sekundären Luftzuführverbindung (13) lokalisiert ist,
**dadurch gekennzeichnet, dass**
der zumindest eine Strömungsregulator (17) einen Teil einer Kassette (20) bildet und das Gehäuse (12) mit einer Kassettenkammer (21) versehen ist, in der die Kassette aufgenommen ist.

2. Wärmetauschsystem nach Anspruch 1, wobei der Strömungsregulator (17) zwischen dem Wärmetauscher (18) und zumindest zwei sekundären Luftzuführverbindungen (13) lokalisiert ist, und vorzugsweise ein Ventil oder eine kippbare Scheibe umfasst, die in einer ersten Position eine Strömung durch eine der sekundären Luftzuführverbindungen verhindert und eine Strömung durch die andere der sekundären Luftzuführverbindungen erlaubt, und in einer zweiten Position eine Strömung durch die andere der sekundären Luftzuführverbindungen verhindert und eine Strömung durch die eine der sekundären Luftzuführverbindungen erlaubt.

3. Wärmetauschsystem (9) nach Anspruch 1, wobei die Zuführströmungspassage (15) mit einem Strömungsregulator (17), der zwischen dem Wärmetauscher (18) und einer der sekundären Luftzuführverbindungen (13) lokalisiert ist, und einem anderen Strömungsregulator (17) versehen ist, der zwischen dem Wärmetauscher (18) und einer anderen der sekundären Luftzuführverbindungen (13) lokalisiert ist, für eine individuelle Regulierung der Luftströmung durch die eine sekundäre Luftzuführverbindung, unabhängig von der Regulierung der Luftströmung durch die andere sekundäre Luftzuführverbindung.

4. Wärmetauschsystem (9) nach einem der vorhergehenden Ansprüche, wobei zumindest ein Strömungsregulator (17) an der Stelle von einer sekundären Luftverbindung (13, 14) lokalisiert ist.

5. Wärmetauschsystem (9) nach einem der vorhergehenden Ansprüche, wobei zumindest die Zuführströmungspassage (15) mit einem Messsystem (23) zum Messen von einer Eigenschaft der Luft versehen ist; oder wobei zumindest die Abführströmungspassage (16) mit einem Messsystem zum Messen von einer Eigenschaft der Luft versehen ist.

6. Wärmetauschsystem (9) nach Anspruch 5, wobei ein Steuerungssystem vorgesehen ist zum Steuern eines Strömungsregulators (17) auf der Basis der Eigenschaft, die von dem Messsystem gemessen wird.

7. Wärmetauschsystem (9) nach Anspruch 5 oder 6, wobei das Messsystem und/oder das Steuerungssystem einen Teil der Kassette (20) bilden.

8. Gebäude, umfassend mehrere Räume (1, 2) und möglicherweise eine Halle (33), zumindest zwei sekundäre Luftzuführleitungen (3, 4) und exakt eine sekundäre Luftabführleitung (5), eine Hauptluftzuführleitung (7) und eine Hauptluftabführleitung (8), sowie ein Wärmetauschsystem (9) nach einem der vorhergehenden Ansprüche,
wobei die zumindest zwei sekundären Luftzuführleitungen (3, 4) mit einem jeweiligen Raum (1', 2') oder mit einem Raum (1', 2') und mit der Halle (33) jeweils verbunden sind, und wobei die exakt eine sekundäre Luftabführleitung (5) mit einem Raum oder der Halle (33) verbunden ist; und
wobei die sekundären Luftzuführleitungen (3, 4) mit jeweils einer der sekundären Luftzuführverbindungen (13) von dem Wärmetauschsystem verbunden sind, wobei die exakt eine sekundäre Luftabführleitung (5) mit der exakt einen sekundären Luftabführverbindung (14) des Wärmetauschsystems verbunden ist, und wobei die Hauptluftzuführleitung (7) mit der Hauptluftzuführverbindung (10) verbunden ist und die Hauptluftabführleitung (8) mit der Hauptluftabführverbindung (11) des Wärmetauschsystems (9) verbunden ist,
wobei das Gehäuse (12) mit zumindest einem Strömungsregulator (17), der zwischen dem Wärmetauscher (12) und einer sekundären Luftzuführleitung (3, 4) lokalisiert ist, und/oder mit zumindest einem Strömungsregulator (17) versehen ist, der zwischen dem Wärmetauscher (12) und der sekundären Luftabführleitung (5) lokalisiert ist.

9. Gebäude nach Anspruch 8, wobei der Strömungsregulator (17) zwischen dem Wärmetauscher und zumindest zwei sekundären Luftzuführleitungen (3, 4) lokalisiert ist und vorzugsweise ein Ventil oder eine kippbare Scheibe umfasst, die in einer ersten Position eine Strömung durch eine der sekundären Luftzuführverbindungen verhindert und eine Strömung durch die andere der sekundären Luftzuführverbindungen erlaubt, und in einer zweiten Position eine Strömung durch die andere der sekundären Luftzuführverbindungen verhindert und eine Strömung durch die eine der sekundären Luftzuführverbindungen erlaubt.

10. Gebäude nach Anspruch 8 oder 9, wobei die genau eine sekundäre Luftabführleitung (5) mit einer Verzweigung (34, 35) verbunden ist, wobei die Verzweigung mit zumindest zwei Zweigen (6, 6', 6") verbunden ist, wobei jeder Zweig mit einem jeweiligen Raum (33, 1", 2") verbunden ist.

11. Verfahren zum Belüften des Gebäudes nach einem der Ansprüche 8 bis 10, umfassend die Schritte des Aktivierens des ersten Boosters (19) zum Vorsehen einer Zuführluftströmung von außerhalb des Gebäudes durch die Hauptluftzuführleitung (7), durch die Zuführströmungspassage (15) und aus der sekundären Luftzuführleitung (en) (3, 4) in zumindest einen Raum (1, 2) oder die Halle (33), und des Aktivierens des zweiten Boosters (19') zum Vorsehen einer Abführluftströmung von einem Raum (1, 2) oder der Halle (33) durch die exakt eine sekundäre Luftabführleitung (5), durch die Abführströmungspassage (16) und aus der Hauptluftabführleitung (8') hinaus, oder umfassend die Schritte des Aktivierens des zweiten Boosters (19') zum Vorsehen einer Zuführluftströmung von außerhalb des Gebäudes durch die Hauptluftabführleitung (7), durch die Abführströmungspassage (15) und aus der exakt einen sekundären Luftabführleitung (5) in einen Raum (1, 2) oder die Halle (33), und des Aktivierens des ersten Booster (19) zum Vorsehen einer Abführluftströmung von zumindest einem Raum (1, 2) oder der Halle (33) durch die sekundäre Luftzuführleitung(en) (3, 4), durch die Zuführströmungspassage (15) und aus der Hauptluftzuführleitung (7) hinaus.

## Revendications

1. Système d'échange thermique (9) pour un immeuble, comprenant un boîtier (12) qui contient un passage d'écoulement d'alimentation (15) et un passage d'écoulement d'évacuation (16),
un échangeur thermique (18) au moyen duquel le passage d'écoulement d'alimentation et le passage d'écoulement d'évacuation sont en relation d'échange thermique l'un avec l'autre,
une connexion d'alimentation en air principale (10) à une première extrémité du passage d'écoulement d'alimentation, à l'autre extrémité duquel passage d'écoulement d'alimentation au moins deux connexions d'alimentation en air secondaires (13) sont positionnées,
dans lequel la première extrémité du passage d'écoulement d'alimentation et l'autre extrémité du passage d'écoulement d'alimentation sont positionnées respectivement en amont et en aval de l'échangeur thermique (18),
une connexion d'évacuation d'air principale (11) à une première extrémité du passage d'écoulement d'évacuation, à l'autre extrémité duquel passage d'écoulement d'évacuation exactement une connexion d'évacuation d'air secondaire (14) est positionnée,
un premier suramplificateur (19) adapté pour alimenter de l'air depuis l'extérieur de l'immeuble à travers la connexion d'alimentation en air principale via le passage d'écoulement d'alimentation et les connexions d'alimentation en air secondaires dans l'immeuble, et
un second suramplificateur (19') adapté pour évacuer de l'air depuis l'immeuble via la connexion d'évacuation d'air secondaire, le passage d'écoulement d'évacuation et la connexion d'évacuation d'air principale, dans lequel le boîtier (12) est muni d'au moins un régulateur d'écoulement (17) qui est positionné entre l'échangeur thermique (18) et une connexion d'alimentation en air secondaire (13),
**caractérisé en ce que**
le au moins un régulateur d'écoulement (17) forme une partie d'une cassette (20) et le boîtier (12) est muni d'une chambre de cassette (21) dans laquelle la cassette est reçue.

2. Système d'échange thermique selon la revendication 1, dans lequel le régulateur d'écoulement (17) est positionné entre l'échangeur thermique (18) et au moins deux connexions d'alimentation en air secondaires (13), et comprend de préférence une soupape ou une lame inclinable qui, dans une première position, empêche un écoulement à travers une première des connexions d'alimentation en air secondaires et permet un écoulement à travers l'autre des connexions d'alimentation en air secondaires, et, dans une seconde position, empêche un écoulement à travers ladite autre des connexions d'alimentation en air secondaires et permet un écoulement à travers ladite première des connexions d'alimentation en air secondaires.

3. Système d'échange thermique (9) selon la revendication 1, dans lequel le passage d'écoulement d'alimentation (15) est muni d'un régulateur d'écoulement (17) qui est positionné entre l'échangeur thermique (18) et une première des connexions d'alimentation en air secondaires (13), et d'un autre régulateur d'écoulement (17) qui est positionné entre l'échangeur thermique (18) et une autre des connexions d'alimentation en air secondaires (13), pour une régulation individuelle de l'écoulement d'air à travers ladite première connexion d'alimentation en air secondaire indépendamment de la régulation de l'écoulement d'air à travers ladite autre connexion d'alimentation en air secondaire.

4. Système d'échange thermique (9) selon l'une quelconque des revendications précédentes, dans lequel au moins un régulateur d'écoulement (17) est positionné au niveau du site d'une connexion d'air secondaire (13, 14).

5. Système d'échange thermique (9) selon l'une quelconque des revendications précédentes, dans lequel au moins le passage d'écoulement d'alimentation (15) est muni d'un système de mesure (23) pour mesurer une propriété de l'air ; ou dans lequel au moins le passage d'écoulement d'évacuation (16) est muni d'un système de mesure pour mesurer une propriété de l'air.

6. Système d'échange thermique (9) selon la revendication 5, dans lequel un système de commande est prévu pour commander un régulateur d'écoulement (17) sur la base de la propriété mesurée par le système de mesure.

7. Système d'échange thermique (9) selon la revendication 5 ou 6, dans lequel le système de mesure et/ou le système de commande forment une partie de la cassette (20).

8. Immeuble comprenant plusieurs pièces (1, 2) et facultativement un hall (33), au moins deux conduits d'alimentation en air secondaires (3, 4) et exactement un conduit d'évacuation d'air secondaire (5), un conduit d'alimentation en air principal (7) et un conduit d'évacuation d'air principal (8) ainsi qu'un système d'échange thermique (9) selon l'une quelconque des revendications précédentes,
dans lequel les au moins deux conduits d'alimentation en air secondaires (3, 4) sont reliés chacun à une pièce respective (1', 2') ou à une pièce (1', 2') et au hall (33) et ledit exactement un conduit d'évacuation d'air secondaire (5) est relié à une pièce ou au hall (33) ; et
dans lequel les conduits d'alimentation en air secondaires (3, 4) sont reliés respectivement à l'une des connexions d'alimentation en air secondaires (13) du système d'échange thermique, le exactement un conduit d'évacuation d'air secondaire (5) est relié à la exactement une connexion d'évacuation d'air secondaire (14) du système d'échange thermique, et dans lequel le conduit d'alimentation en air principal (7) est relié à la connexion d'alimentation en air principale (10) et le conduit d'évacuation d'air principal (8) est relié à la connexion d'évacuation d'air principale (11) du système d'échange thermique (9),
dans lequel le boîtier (12) est muni d'au moins un régulateur d'écoulement (17) qui est positionné entre l'échangeur thermique (12) et un conduit d'alimentation en air secondaire (3, 4) et/ou d'au moins un régulateur d'écoulement (17) qui est positionné entre l'échangeur thermique (12) et le conduit d'évacuation d'air secondaire (5).

9. Immeuble selon la revendication 8, dans lequel le régulateur d'écoulement (17) est positionné entre l'échangeur thermique (12) et au moins deux conduits d'alimentation en air secondaires (3, 4) et comprend de préférence une soupape ou une lame inclinable qui, dans une première position, empêche un écoulement à travers une première des connexions d'alimentation en air secondaires et permet un écoulement à travers l'autre des connexions d'alimentation en air secondaires, et, dans une seconde position, empêche un écoulement à travers ladite autre des connexions d'alimentation en air secondaires et permet un écoulement à travers ladite première des connexions d'alimentation en air secondaires.

10. Immeuble selon la revendication 8 ou 9, dans lequel le exactement un conduit d'évacuation d'air secondaire (5) est relié à un collecteur (34, 35), ledit collecteur étant relié à au moins deux branches (6, 6', 6"), chaque branche étant reliée à une pièce respective (33, 1", 2").

11. Procédé de ventilation de l'immeuble selon l'une quelconque des revendications 8 à 10, comprenant les étapes consistant à activer le premier suramplificateur (19) pour fournir un écoulement d'air d'alimentation depuis l'extérieur de l'immeuble à travers le conduit d'alimentation en air principal (7), à travers le passage d'écoulement d'alimentation (15) et hors du ou des conduits d'alimentation en air secondaires (3, 4) dans au moins une pièce (1, 2) ou le hall (33), et à activer le second suramplificateur (19') pour fournir un écoulement d'air d'évacuation depuis une pièce (1, 2) ou le hall (33) à travers le exactement un conduit d'évacuation d'air secondaire (5), à travers le passage d'écoulement d'évacuation (16) et hors du conduit d'évacuation d'air principal (8) ou comprenant les étapes consistant à activer le second suramplificateur (19') pour fournir un écoulement d'air d'alimentation depuis l'extérieur de l'immeuble à travers le conduit d'évacuation d'air principal (7), à travers le passage d'écoulement d'évacuation (15) et hors du exactement un conduit d'évacuation d'air secondaire (5) dans une pièce (1, 2) ou le hall (33), et à activer le premier suramplificateur (19) pour fournir un écoulement d'air d'évacuation depuis au moins une pièce (1, 2) ou le hall (33) à travers le ou les conduits d'alimentation en air secondaires (3, 4), à travers le passage d'écoulement d'alimentation (15) et hors du conduit d'alimentation en air principal (7).
